# EUROPÄISCHE PATENTSCHRIFT

(11) **EP 1 447 822 B1**
(45) Veröffentlichungstag und Bekanntmachung des Hinweises auf die Patenterteilung: **09.09.2009**
(21) Anmeldenummer: 03405081.5
(22) Anmeldetag: 12.02.2003
(51) Int. Cl.: H01C 7/12, H01T 4/06

(54) **Aktivteil für einen Überspannungsableiter**
Active component for a surge arrester
Composant active pour limiteur de surtension

(43) Veröffentlichungstag der Anmeldung: 18.08.2004
(73) Patentinhaber: ABB Technology AG, 8050 Zürich (CH)
(72) Erfinder: Schmidt, Walter, 5454 Bellikon (CH); Hauser, Robert, 8965 Berikon (CH)
(74) Vertreter: ABB Patent Attorneys

(56) Entgegenhaltungen:
- US-A- 5 936 826
- US-A- 5 942 968
- PATENT ABSTRACTS OF JAPAN vol. 013, no. 155 (E-743), 14. April 1989 (1989-04-14) -& JP 63 313806 A (OTOWA DENKI KOGYO KK), 21. Dezember 1988 (1988-12-21)
- PATENT ABSTRACTS OF JAPAN vol. 2003, no. 04, 2. April 2003 (2003-04-02) -& JP 2002 353009 A (FURUKAWA ELECTRIC CO LTD:THE), 6. Dezember 2002 (2002-12-06)

## Beschreibung

### TECHNISCHES GEBIET

Bei der Erfindung wird ausgegangen von einem Aktivteil für einen Überspannungsableiter nach dem Oberbegriff von Patentanspruch 1. Die Erfindung betrifft auch einen dieses Aktivteil enthaltenden Überspannungsableiter.

Das Aktivteil enthält zwei längs einer Achse mit Abstand zueinander angeordnete und mit einer Spannung im Voltbereich höher als 1 kV beaufschlagbare Anschlussarmaturen. Zwischen den beiden Anschlussarmaturen befindet sich eine von einem Varistorelement oder zwei oder mehr in Serie geschalteten Varistorelementen gebildete Varistorsäule. Ferner enthält das Aktivteil eine Isolierstoffschlaufe oder gegebenenfalls zwei oder mehr Isolierstoffschlaufen.
Diese Schlaufe ist bzw. die Schlaufen sind auf den beiden Anschlussarmaturen abgestützt und halten so die Anschlussarmaturen und die Varistorsäule unter Bildung von Kontaktkraft zusammen. Die Schlaufe bzw. die Schlaufen können auch auf einer der beiden Anschlussarmaturen und einem zwischen beiden Anschlussarmaturen in der Varistorsäule angeordneten Verbindungsstück abgestützt sein und einen von der abstützenden Anschlussarmatur und dem Verbindungstück begrenzten Abschnitt der Varistorsäule unter Bildung von Kontaktkraft zusammenhalten.

Wird das Aktivteil, etwa durch Einbetten in ein Polymer oder durch Einbau in ein - gegebenenfalls gasisoliertes - Gehäuse, gegen Berührung oder Verschmutzung geschützt, so entsteht ein Überspannungsableiter.

### STAND DER TECHNIK

Mit dem Oberbegriff nimmt die Erfindung auf einen Stand der Technik von Überspannungsableitern Bezug, wie er in EP 614,198 B1 oder in US 5'942'968 angegeben ist. In diesen Patentveröffentlichungen beschriebene Überspannungsableiter enthalten jeweils ein von einem Polymergehäuse umgossenes säulenförmiges Aktivteil mit einer zwischen zwei Anschlussarmaturen gehaltenen Varistorsäule. Die Haltekraft, zugleich aber auch die Kontaktkraft im Aktivteil, wird aufgebracht durch eine oder mehrere auf den beiden Anschlussarmaturen abgestützte, vorgespannte Isolierstoffschlaufen. Die Anschlussarmaturen sind jeweils aus einem Metallzylinder herausgearbeitet und weisen Schlitze und/oder Vorsprünge auf, welche jeweils zum Halten eines Endes der Isolierstoffschlaufen dienen. Zudem enthalten die Anschlussarmaturen in Säulenrichtung geführte Bohrungen zur Aufnahme von Stromanschlüssen sowie gegebenenfalls auch einen ebenfalls in Säulenrichtung erstreckten und der Aufnahme eines Abschnitts der Varistorsäule dienenden Hohlraum. Daher erstrecken sich die Anschlussarmaturen in Säulenrichtung über eine vergleichsweise grosse Distanz und vergrössern so die Bauhöhe des Aktivteils und damit auch des Überspannungsableiters.

Ferner ist in EP 1,066,640 B1 ein Überspannungsableiter mit einem eine Varistorsäule enthaltendem Aktivteil beschrieben, bei dem in der Varistorsäule ein Verbindungsstück angeordnet ist mit Lagerstellen, auf denen zu einer oberen und zu einer unteren Anschlussarmatur des Aktivteils geführte, vorgespannte Isolierstoffschlaufen abgestützt sind. Auch diese Isolierstoffschlaufen dienen der Bildung von Halte- und Kontaktkraft. Durch das Verbindungstück wird gegenüber dem vorgenannten Stand der Technik eine höhere dielektrische Belastbarkeit des Aktivteils und damit eine höhere Spannungsklasse des Überspannungsableiters erzielt.

### DARSTELLUNG DER ERFINDUNG

Die Erfindung, wie sie in den Patentansprüchen definiert ist, löst die Aufgabe, ein Aktivteil der eingangs genannten Art anzugeben, welches sich durch eine geringe Bauhöhe auszeichnet.

Beim Aktivteil nach der Erfindung weist mindestens eine der beiden Anschlussarmaturen eine senkrecht zur Achse angeordnete und als Platte ausgeführte Elektrode auf sowie einen an die Platte angeformten Stromanschluss und Mittel zum Abstützen eines Endes der Isolierstoffschlaufe, welche in die Platte eingeformt und/oder an den Rand der Platte angeformt sind. Die Bauhöhe des Aktivteils wird so zum einen erheblich reduziert. Zum anderen können die Anschlussarmaturen nun mit wenig Material und mit geringem Aufwand gefertigt werden, so dass sich die Herstellkosten des Aktivteils wesentlich verringern.

Aus Gründen der Materialersparnis empfiehlt es sich, den an die Platte angeformten Stromanschluss flach auszubilden. Ein solcher Stromanschluss kann je nach Anordnung und Ausbildung des daran anzuschliessenden Leiters unter einem beliebigen Winkel zur Plattenebene mit der Platte verbunden sein. Um ein einfaches Anschliessen des Leiters zu ermöglichen, ist es vorteilhaft, den Stromanschluss als Lochplatte oder als Steckkontakt auszubilden.

Bei einer Ausführungsform des erfindungsgemässen Aktivteils, bei der die Kontaktkraft mit mindestens einer Tellerfeder erreicht wird, kann diese Feder unter Beibehalt einer vorgegebenen Bauhöhe zentriert werden, wenn aus einer der Varistorsäule zugewandten Oberfläche der Platte eine axialsymmetrisch ausgebildete Zentriernase ragt. Diese Nase kann in die Patte eingeformt sein, kann aber auch als Einlegteil ausgeführt und in einer Ausnehmung der Platte festgesetzt sein. Die Nase ist durch das Loch der im allgemeinen als kegelförmige Ringscheibe ausgebildeten Tellerfeder geführt. Um einer Überdehnung der Tellerfeder bei der Montage oder während des Betriebs des Aktivteils zuvorzukommen, sollten der Durchmesser der Zentriernase und der Innendurchmesser der Ringscheibe derart aufeinander abgestimmt sein, dass ein Plattdrücken der Tellerfeder vermieden wird.

Beim erfindungsgemässen Aktivteil weisen die Abstützmittel mit Vorteil mindestens eine an den Rand der Platte angeformte Schulter auf, welche Schulter verglichen mit dem Durchmesser der Varistorsäule schmal bemessen ist. Eine solche schmale Schulter eignet sich besonders zur Fertigung von Aktivteilen mit grossen Durchmessern. Mit mehreren solcher schmalen Schultern und mit einer entsprechenden Anzahl an Isolierstoffschlaufen kann unter Beibehalt der durch die Dicke der Platte mitbestimmten geringen Bauhöhe ein mechanisch stabiles Aktivteil erreicht werden.

Weisen die Abstützmittel eine in die Platte eingeformte und durch die Achse der Varistorsäule geführte Schulter auf, so kann unter Beibehalt der geringen Bauhöhe mit einer einzigen Isolierstoffschlaufe die mechanische Festigkeit und die erwünschte Kontaktkraft des Aktivteils erreicht werden. Eine zusätzliche Erhöhung der mechanische Festigkeit wird mit Abstützmitteln erreicht, welche zwei Schultern enthalten, von denen jede in einen von zwei geradlinig verlaufenden Abschnitten des Plattenrands eingeformt ist. Unabhängig davon, ob nur eine oder ob zwei oder gegebenenfalls auch mehr Schultern in der Platte vorgesehen sind, ist es zur Erzielung einer guten mechanischen Festigkeit und eines gleichmässigen Kontaktdrucks unter Beibehalt der geringen Bauhöhe vorteilhaft, dass jede Schulter eine weitgehend parallel zur Plattenoberfläche über den grössten Teil der Plattenausdehnung geführte Fläche enthält, und dass die zugeordnete Schlaufe nach Art eines Rechtecks ausgebildet und mit einer der Rechteckseiten innenseitig auf der Fläche abgestützt ist.

### KURZE BESCHREIBUNG DER ZEICHNUNGEN

Die Erfindung wird nachstehend anhand von Ausführungsbeispielen erläutert. Es zeigt:
- Fig.1: eine Explosionsdarstellung einer ersten Ausführungsform des Aktivteils nach der Erfindung,
- Fig.2: eine Vorderansicht der ersten Ausführungsform des Aktivteils,
- Fig.3: eine Seitenansicht der ersten Ausführungsform des Aktivteils,
- Fig.4: eine für Innenraumanwendungen bestimmte, das Aktivteil gemäss den Figuren 1 bis 3 enthaltende Ausführungsform eines Überspannungsableiters,
- Fig.5: eine für Freiluftanwendungen bestimmte, das Aktivteil gemäss den Figuren 1 bis 3 enthaltende Ausführungsform eines Überspannungsableiters,
- Fig.6: eine Ansicht einer für eine hohe dielektrische Belastung bestimmten zweiten Ausführungsform des Aktivteils nach der Erfindung,
- Fig.7: eine Ansicht einer steckbar ausgeführten dritten Ausführungsform des Aktivteils nach der Erfindung,
- Fig.8: eine Ansicht einer vierten Ausführungsform des Aktivteils nach der Erfindung, und
- Fig.9: eine Ansicht einer fünften Ausführungsform des Aktivteils nach der Erfindung.

### WEGE ZUR AUSFÜHRUNG DER ERFINDUNG

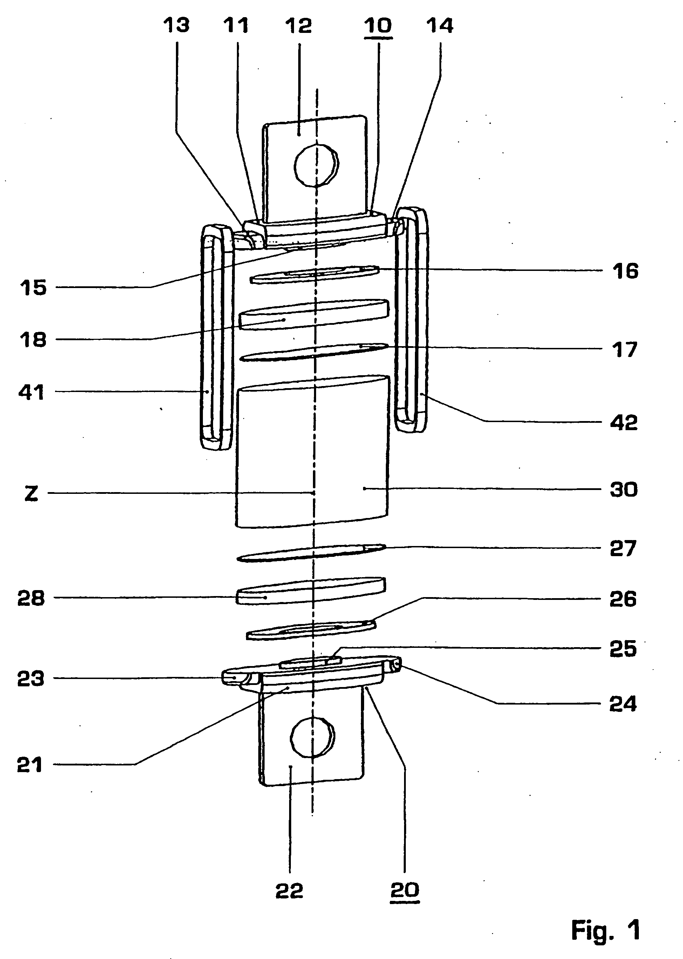

In allen Figuren bezeichnen gleiche Bezugszeichen auch gleichwirkende Teile. Das in den Figuren 1 bis 3 dargestellte Aktivteil enthält zwei aus elektrisch leitendem Material, wie Aluminium, bestehende und voneinander längs einer Achse z (Fig.1) beabstandete Anschlussarmaturen 10, 20. Jede der beiden Anschlussarmaturen 10 bzw. 20 weist eine senkrecht zur Achse angeordnete und als Platte 11 bzw. 21 ausgeführte Elektrode auf sowie einen an die Platte 11 bzw. 21 angeformten Stromanschluss 12 bzw. 22. An entgegengesetzt angeordneten Seiten der Platten sind in geradlinig verlaufende Abschnitte des Plattenrandes Schultern 13, 14 bzw. 23, 24 eingeformt. Aus der Unterseite der Platte 11 bzw. der Oberseite der Platte 21 ragt eine kreisscheibenförmig ausgebildete Nase 15 bzw. 25. Die Nase 15 bzw. 25 umgibt die die Achse z rotationssymmetrisch und dient der Zentrierung und Führung einer oder mehrerer jeweils als kegelförmige Ringscheibe ausgebildeter Tellerfedern 16 bzw. 26 aus einem elektrisch leitfähigen Material.

Die Nase 15 bzw. 25, die Tellerfeder 16 bzw. 26 und eine zylinderförmige Varistorsäule 30 aus nichtlinearem Widerstandsmaterial, etwa auf der Basis von Metalloxid, wie insbesondere von ZnO, sind koaxial zwischen den Anschlussarmaturen 10, 20 angeordnet. Ersichtlich ist die Varistorsäule 30 von einem einzigen Varistorelement gebildet, kann aber auch mehrere übereinandergestapelte Elemente enthalten. Die obere bzw. auf die untere Stirnfläche der Varistorsäule 30 ist kontaktiert mit einem Stromübergangselement 17 bzw. 27. Zwischen der Tellerfeder 16 bzw. 26 und dem Stromübergangselement 17 bzw. 27 ist eine stromleitende Druckaufnahmeplatte 18 bzw. 28 vorgesehen.

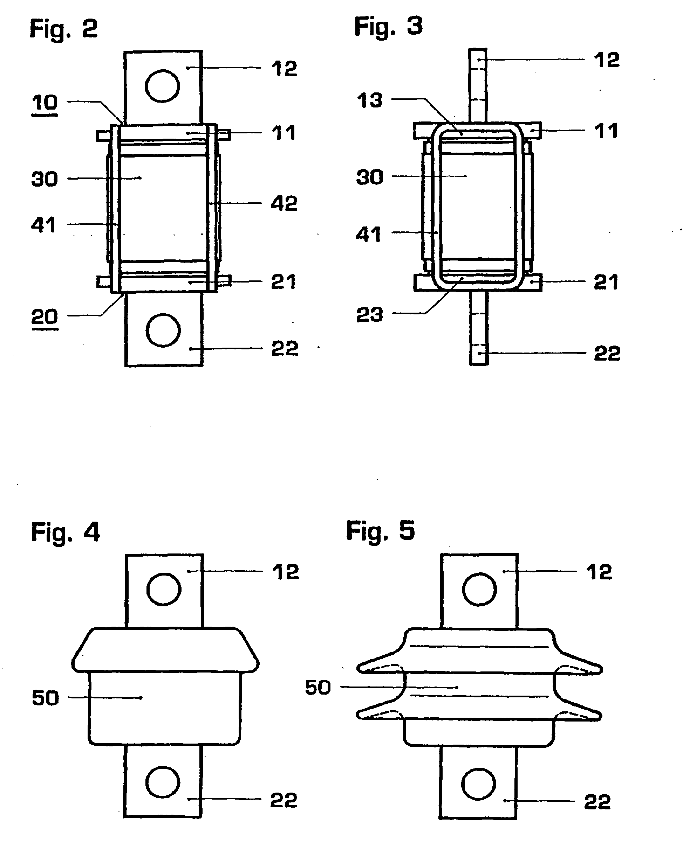

Wie aus den Figuren 2 und 3 ersichtlich ist, ist das Aktivteil nach Art einer Säule ausgebildet. Der Fuss der Säule wird von der Platte 21, der Kopf von der Platte 11 gebildet. Entsprechend Fig.1 sind dazwischen der Reihe nach angeordnet die Tellerfeder 26, die Druckaufnahmeplatte 18, das Stromübergangselement 27, die Varistorsäule 30, das Stromübergangselement 17, die Druckaufnahmeplatte 18 und die Tellerfeder 16. Die Säule wird durch zwei rechteckförmig ausgebildete Isolierstoffschlaufen 41 und 42 zusammengehalten. Bei der Fertigung des Aktivteils wird die Säule gegen die Kraft der Tellerfedern 16, 26 vorgespannt. Hierbei werden die Tellerfedern auf den beiden Nasen 15 und 25 zentriert. Die Durchmesser der Zentriernasen 15 bzw. 25 und die Innendurchmesser der ringscheibenförmigen Tellerfedern 16 bzw. 26 sind so aufeinander abgestimmt, dass ein Plattdrücken der Tellerfedern und ein damit verbundenes unzulässiges Überdehnen vermieden werden. Bei vorgespannter Säule werden nun auf die Schultern 13, 23 bzw. 14, 24 die Isolierstoffschlaufen 41 bzw. 42 aufgeschoben und die Säule danach entspannt. Der Federweg der Tellerfedern ist so bemessen, dass die von ihnen aufgebrachte und von den Isolierstoffschlaufen aufgenommene Kraft ausreicht, um die Säule als Aktivteil zusammenzuhalten. Da das Aktivteil bei bestimmten Betriebsbedingungen vorübergehend Strom führen muss, ist die Kraft zugleich ausreichend gross gewählt, um die Kontaktwiderstände in einem von der Anschlussarmatur 10 über die Varistorsäule 30 zur Anschlussarmaturen 20 verlaufenden Strompfad klein zu halten.

Wie aus Fig.3 ersichtlich ist, enthalten die Schultern 13, 23 eine weitgehend parallel zur Plattenoberfläche über den grössten Teil der Plattenausdehnung geführte Fläche und ist die rechteckigförmig ausgebildete Isolierstoffschlaufe 41 mit zwei einander gegenüberliegenden Rechteckseiten innenseitig auf diesen Flächen abgestützt. Durch diese Ausbildung der Schultern und der Isolierstoffschlaufe können die Abmessungen der Anschlussarmaturen 10, 20 gering bemessen und auf die Dicken der Platten 11 und 21 reduziert werden. Neben einer geringen Bauhöhe des Aktivteils sind zugleich auch dessen mechanische Festigkeit und dessen Stromtragfähigkeit gewährleistet.

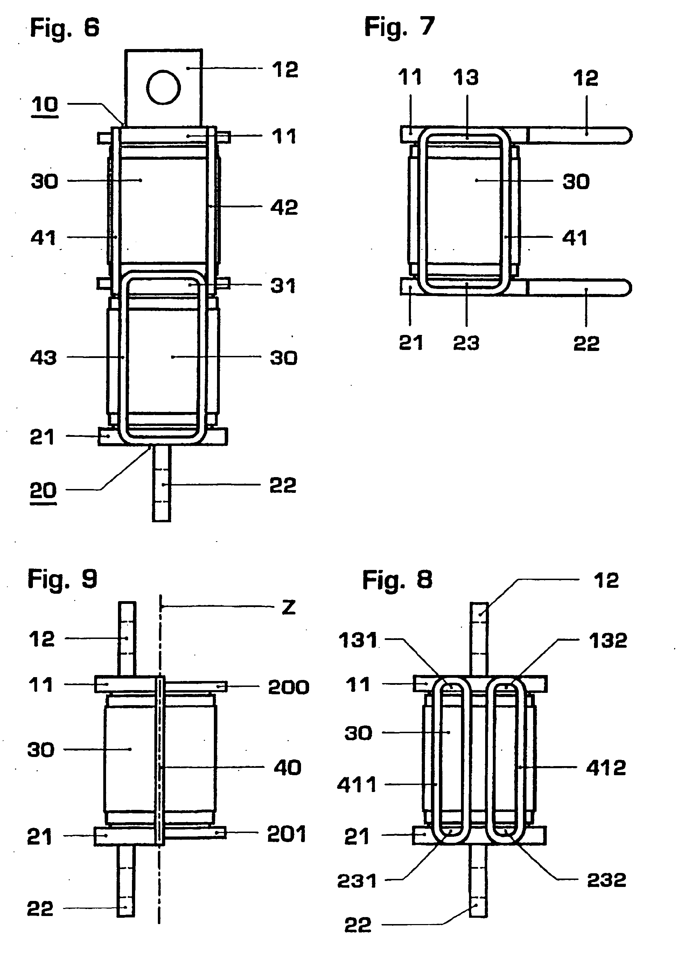

Um den Materialeinsatz und die Fertigungskosten zu reduzieren, sind die Stromanschlüsse 12, 22 flach ausgebildet. Sie können praktisch unter einem beliebigen Winkel an die Platten 11, 22 angeformt sein. Sind sie wie beim Ausführungsbeispiel gemäss den Figuren 1 bis 3 in Richtung der Achse z ausgerichtet, zentral an die Platten angeformt und als Lochblech ausgebildet, so kann selbst ein mit Hochspannung belastbarer schwerer Kabelleiter am Anschluss 12 und ein entsprechend ausgebildeter Erdungsleiter platzsparend am Anschluss 22 angeschraubt werden. Die Anschlüsse 12, 22 können aber auch - wie in Fig.7 dargestellt ist - in Richtung der Platten 11, 21 geführt und beispielsweise als Steckanschlüsse ausgebildet sein.

Wie aus den Figuren 4 und 5 entnommen werden kann, können die Varistorsäule, die Platten der Anschlussarmaturen und die Isolierstoffschlaufen mit Isoliermaterial, beispielsweise einem Polymer, etwa auf der Basis Silikon oder Epoxy, umhüllt werden. Es entsteht dann je nach Design der umhüllenden Isolierstoffmasse ein für Innenraumanwendungen (Fig.4) oder ein für Freiluftanwendungen (Fig.5) geeigneter Überspannungsableiter mit aus einem Isolierstoffgehäuse 50 geführten Stromanschlüssen 12, 22.

Die Isolierstoffschlaufen müssen nicht notwendigerweise auf beiden Anschlussarmaturen abgestützt sein. Wie aus dem Ausführungsbeispiel gemäss Fig.6 ersichtlich ist, kann bei einem mit hohen Spannungen belastbaren Aktivteil in der Varistorsäule ein metallenes Verbindungsstück 31 angeordnet sein. Die Isolierstoffschlaufen 41, 42 sind dann auf der oberen Platte 11 der Anschlussarmatur 10 und dem Verbindungsstück 31 abgestützt und stellen die Halte- und Kontaktkraft in einem oberen Abschnitt des Aktivteils her. Eine Isolierstoffschlaufe 43 und eine nicht ersichtliche weitere Isolierstoffschlaufe sind auf dem Verbindungsstück 31 und der Platte 21 der unteren Anschlussarmatur 20 abgestützt und stellen die Halte- und Kontaktkraft in einem unteren Abschnitt des Aktivteils her.

Bei der Ausführungsform des Aktivteils nach Fig.9 sind als Abstützmittel lediglich zwei in die Platten 11, 21 eingeformte und durch die Achse z der Varistorsäule geführte Schultern 200 und 201 vorgesehen. Dadurch ist sichergestellt, dass eine ebenfalls als Rechteck ausgeführte Isolierstoffschlaufe 40 im Bereich der Achse z zentral gehalten ist und eine gleichmässige Halte- und Kontaktkraft im Aktivteil sicherstellt. Eine gleichmässige Stromdichte eines beim Auftreten einer Überspannung im Aktivteil geführten Ableitstroms ist so gewährleistet.

Wie in Fig.8 dargestellt ist, können als Abstützmittel in die Ränder der Platten 11, 21 Schultern 131, 132, 231, 232 eingeformt werden, welche verglichen mit dem Durchmesser der Varistorsäule schmal bemessen sind. Ohne den Vorteil einer geringen Bauhöhe und der Materialersparnis aufzugeben, kann die Halte- und Kontaktkraft im Aktivteil durch eine vergleichsweise grosse Anzahl schmal ausgebildeter Isolierstoffschlaufen 411, 412 erzielt werden.

### BEZUGSZEICHENLISTE

- 10,20: Anschlussarmaturen
- 11, 21: Platten
- 12, 22: Stromanschlüsse
- 13,14,23,24,131,132, 200, 201, 231, 232: Schultern
- 15, 25: Zentriernasen
- 16, 26: Tellerfedern
- 17, 27: Stromübergangselemente
- 18, 28: Druckaufnahmeplatten
- 30: Varistorsäule
- 31: Verbindungsstück
- 40, 41, 42, 43, 411, 412: Isolierstoffschlaufen
- 50: Isolierstoffgehäuse
- z: Achse

## Patentansprüche

1. Aktivteil für einen Überspannungsableiter mit zwei längs einer Achse (z) mit Abstand zueinander angeordneten Anschlussarmaturen (10, 20), mindestens einer zwischen den beiden Anschlussarmaturen vorgesehenen zylinderförmigen Varistorsäule (30) und mindestens einer Isolierstoffschlaufe (40, 41, 42, 43, 411, 412), welche auf den beiden Anschlussarmaturen (10, 20) oder einer der beiden Anschlussarmaturen und einem zwischen beiden Anschlussarmaturen in der Varistorsäule angeordneten Verbindungsstück (31) abgestützt ist und die Varistorsäule (30) oder einen von der abstützenden Anschlussarmatur (10, 20) und dem Verbindungsstück (31) begrenzten Abschnitt der Varistorsäule unter Bildung von Kontaktkraft zusammenhält, **dadurch gekennzeichnet, dass** mindestens eine der beiden Anschlussarmaturen eine senkrecht zur Achse angeordnete und als Platte (11, 12) ausgeführte Elektrode aufweist sowie einen an die Platte angeformten Stromanschluss (12, 22) und Mittel zum Abstützen eines Endes der Isolierstoffschlaufe, welche in die Platte eingeformt und/oder an den Rand der Platte angeformt sind.

2. Aktivteil nach Anspruch 1, **dadurch gekennzeichnet, dass** der Stromanschluss (12, 22) flach ausgeführt ist.

3. Aktivteil nach Anspruch 2, **dadurch gekennzeichnet, dass** der Stromanschluss als Lochplatte oder als Steckkontakt ausgebildet ist.

4. Aktivteil nach einem der Ansprüche 1 bis 3, **dadurch gekennzeichnet, dass** aus einer der Varistorsäule (30) zugewandten Oberfläche der Platte (11, 21) eine axialsymmetrisch ausgebildete Zentriernase (15, 25) ragt, welche der Führung mindestens einer als kegelförmige Ringscheibe ausgebildeten Tellerfeder (16, 26) dient.

5. Aktivteil nach Anspruch 4, **dadurch gekennzeichnet, dass** der Durchmesser der Zentriernase (15, 25) und der Innendurchmesser der Ringscheibe derart aufeinander abgestimmt sind, dass ein Plattdrücken der Tellerfeder 16, 26) vermieden wird.

6. Aktivteil nach einem der Ansprüche 1 bis 5, **dadurch gekennzeichnet, dass** die Abstützmittel mindestens eine an den Rand der Platte (11, 21) angeformte Schulter (131, 132, 231, 232) aufweisen, welche Schulter verglichen mit dem Durchmesser der Varistorsäule schmal bemessen ist.

7. Aktivteil nach einem der Ansprüche 1 bis 5, **dadurch gekennzeichnet, dass** die Abstützmittel eine in die Platte (11, 21) eingeformte und durch die Achse (z) der Varistorsäule (30) geführte Schulter (200, 201) enthalten.

8. Aktivteil nach einem der Ansprüche 1 bis 5, **dadurch gekennzeichnet, dass** die Abstützmittel zwei in die Platte (11, 21) eingeformte Schultern (13, 14, 23, 24) enthalten, welche jeweils in einem von zwei geradlinig verlaufenden Abschnitten des Plattenrands angeordnet sind.

9. Aktivteil nach einem der Ansprüche 7 oder 8, **dadurch gekennzeichnet, dass** die Schulter eine weitgehend parallel zur Plattenoberfläche über den grössten Teil der Plattenausdehnung geführte Fläche enthält, und dass die Schlaufe (40, 41, 42, 43) nach Art eines Rechtecks ausgebildet und mit einer der Rechteckseiten innenseitig auf der Fläche abgestützt ist.

10. Überspannungsableiter mit einem Aktivteil nach einem der Ansprüche 1 bis 9 und mit einem die Varistorsäule (30), Teile der Anschlussarmaturen (10, 20) und die Isolierstoffschlaufe (40, 41, 42, 43) umhüllenden Gehäuse (50) aus Isoliermaterial.

11. Überspannungsableiter nach Anspruch 10, **dadurch gekennzeichnet, dass** Stromanschlüsse (12, 22) der Armaturen aus dem Gehäuse geführt sind.

## Claims

1. Active part for a surge arrester having two connecting fittings (10, 20) which are arranged along an axis (z) at a distance from one another, having at least one cylindrical varistor column (30), which is provided between the two connecting fittings, and having at least one dielectric loop (40, 41, 42, 43, 411, 412), which is supported on the two connecting fittings (10, 20) or on one of the two connecting fittings and a connection piece (31) which is arranged between the two connecting fittings in the varistor column, and holds together the varistor column (30) or a section of the varistor column which is bounded by the supporting connecting fitting (10, 20) and the connection piece (31), forming a contact force, **characterized in that** at least one of the two connecting fittings has an electrode which is arranged at right angles to the axis and is in the form of a plate (11, 12) as well as an electrical connection (12, 22) which is integrally formed on the plate, and means for supporting one end of the dielectric loop, which means are formed in the plate and/or are integrally formed at the edge of the plate.

2. Active part according to Claim 1, **characterized in that** the electrical connection (12, 22) is flat.

3. Active part according to Claim 2, **characterized in that** the electrical connection is in the form of a perforated plate or a plug-in contact.

4. Active part according to one of Claims 1 to 3, **characterized in that** an axially symmetrical centering tab (15, 25) projects from a surface of the plate (11, 21) facing the varistor column (30) and is used to guide at least one cup spring (16, 26) which is in the form of a conical annular disk.

5. Active part according to Claim 4, **characterized in that** the diameter of the centering tab (15, 25) and the internal diameter of the annular disk are matched to one another so as to prevent the cup spring (16, 26) from being pressed flat.

6. Active part according to one of Claims 1 to 5, **characterized in that** the supporting means have at least one shoulder (131, 132, 231, 232) which is integrally formed at the edge of the plate (11, 21) and is narrower than the diameter of the varistor column.

7. Active part according to one of Claims 1 to 5, **characterized in that** the supporting means have a shoulder (200, 201) which is formed in the plate (11, 21) and passes through the axis (z) of the varistor column (30).

8. Active part according to one of Claims 1 to 5, **characterized in that** the supporting means have two shoulders (13, 14, 23, 24) which are formed in the plate (11, 21) and are each arranged in one of two sections of the plate edge which run in a straight line.

9. Active part according to one of Claims 7 or 8, **characterized in that** the shoulder has a surface which is largely parallel to the plate surface over the majority of the plate extent, and **in that** the loop (40, 41, 42, 43) is in the form of a rectangle and is supported on the inside by means of one of the rectangular faces on the surface.

10. Surge arrester having an active part according to one of Claims 1 to 9 and having a housing (50) which is composed of insulating material and surrounds the varistor column (30), parts of the connecting fittings (10, 20) and the dielectric loop (40, 41, 42, 43).

11. Surge arrester according to Claim 10, **characterized in that** electrical connections (12, 22) of the fittings are passed out of the housing.

## Revendications

1. Partie active pour évacuateur de surtension, qui présente deux armatures de raccordement (10, 20) disposées à distance l'une de l'autre, au moins une colonne cylindrique de varistor (30) prévue entre les deux armatures de raccordement et au moins une boucle (40, 41, 42, 42, 411, 412) en matériau isolant soutenue sur les deux armatures de raccordement (10, 20) ou sur une des deux armatures de raccordement et une pièce de liaison (31) qui est disposée entre les deux armatures de raccordement de la colonne de varistor et qui maintient ensemble la colonne de varistor (30) ou une partie de la colonne de varistor délimitée par une des armatures de raccordement (10, 20) et par la pièce de liaison (31) en exerçant une force de contact, **caractérisée en ce que**
au moins l'une des armatures de raccordement présente une électrode disposée perpendiculairement à l'axe et configurée comme plaque (11, 21) ainsi qu'un raccordement de courant (12, 22) formé sur la plaque, et des moyens de soutien d'une extrémité de la boucle en matériau isolant qui sont formés dans la plaque et/ou sur le bord de la plaque.

2. Partie active selon la revendication 1, **caractérisée en ce que** le raccordement de courant (12, 22) est plat.

3. Partie active selon la revendication 2, **caractérisée en ce que** le raccordement de courant est configuré comme plaque perforée ou comme contact enfichable.

4. Partie active selon l'une des revendications 1 à 3, **caractérisée en ce qu'**un bec de centrage (15, 25) symétrique par rapport à l'axe et qui sert à guider au moins une rondelle-ressort (16, 26) configurée comme disque annulaire conique déborde de la surface de la plaque (11, 21) tournée vers la colonne de varistor (30).

5. Partie active selon la revendication 4, **caractérisée en ce que** le diamètre du bec de centrage (15, 25) et le diamètre intérieur du disque annulaire sont accordés l'un à l'autre de manière à éviter qu'une poussée à plat soit exercée sur la rondelle-ressort (16, 26).

6. Partie active selon l'une des revendications 1 à 5, **caractérisée en ce que** les moyens de soutien présentent au moins un épaulement (131, 132, 231, 232) formé sur le bord de la plaque (11, 21), le diamètre de cet épaulement étant plus étroit que le diamètre de la colonne de varistor.

7. Partie active selon l'une des revendications 1 à 5, **caractérisée en ce que** les moyens de soutien contiennent un épaulement (200, 201) formé dans la plaque (11, 21) et guidé suivant l'axe (z) de la colonne de varistor (30).

8. Partie active selon l'une des revendications 1 à 5, **caractérisée en ce que** les moyens de soutien contiennent deux épaulements (13, 14, 23, 24) formés dans la plaque (11, 21) et disposés chacun dans une partie rectiligne respective du bord de la plaque.

9. Partie active selon l'une des revendications 7 ou 8, **caractérisée en ce que** l'épaulement contient une surface guidée largement en parallèle à la surface de la plaque sur la plus grande partie de l'extension de la plaque et **en ce que** la boucle (40, 41, 42, 43) est configurée sensiblement en rectangle et s'appuie intérieurement sur la surface par un des côtés du rectangle.

10. Evacuateur de surtension doté d'une partie active selon l'une des revendications 1 à 9 et d'un boîtier (50) en matériau isolant qui englobe la colonne de varistor (30), des parties des armatures de raccordement (10, 20) et la boucle (40, 41, 42, 43) en matériau isolant.

11. Evacuateur de surtension selon la revendication 10, **caractérisé en ce que** les raccordements de courant (12, 22) des armatures sont prolongés hors du boîtier.
